# EUROPÄISCHE PATENTSCHRIFT

(11) **EP 0 466 148 B1**
(45) Veröffentlichungstag und Bekanntmachung des Hinweises auf die Patenterteilung: **15.09.1999**
(21) Anmeldenummer: 91111553.3
(22) Anmeldetag: 11.07.1991
(51) Int. Cl.: C08F 14/26

(54) **Verfahren zur Herstellung von Tetrafluorethylen-Polymerisat in wässriger Suspension**
Process for preparing a polymer of tetrafluoroethylene in aqueous suspension
Procédé de préparation de polymère de tétrafluoroéthylène en suspension aqueuse

(30) Priorität: 13.07.1990 DE 4022405
(43) Veröffentlichungstag der Anmeldung: 15.01.1992
(73) Patentinhaber: Dyneon GmbH, 84504 Burgkirchen (DE)
(72) Erfinder: Felix, Bernd, Dr., W-8269 Burgkirchen (DE); Löhr, Gernot, Dr., W-8269 Burgkirchen (DE); Hofmeister, Willibald, W-8269 Burgkirchen (DE); Hengel, Rolf, Dr., W-8269 Burgkirchen (DE)

(56) Entgegenhaltungen:
- EP-A- 0 149 000
- DE-A- 1 745 252
- DE-A- 2 325 562
- FR-A- 2 229 716
- GB-A- 1 042 887

## Beschreibung

Die Erfindung betrifft ein Verfahren zur Herstellung von granularem, aus der Schmelze nicht verarbeitbarem Tetrafluorethylen-Polymerisat durch Suspensions-Polymerisation von Tetrafluorethylen und 0 bis 0,6 Mol-% eines perfluorierten Olefins oder Perfluor (alkyl-vinyl) ethers als modifizierendem Comonomeren in wäßriger Phase in Gegenwart radikalbildender Initiatoren, wobei vor Beginn der Polymerisation eine Mischung von Tetrafluorethylen und Inertgas aufgepreßt wird.

Die Suspensions-Polymerisation des Tetrafluorethylens (TFE) in wäßriger Phase ist seit langem bekannt (US-PS 2 393 967). Sie erfolgt in Gegenwart wasserlöslicher Initiatoren, wie beispielsweise von Alkali- oder Ammoniumpersulfaten, -percarbonaten, -perphosphaten oder -perboraten, oder von wasserlöslichen Redox-Initiatoren. Ferner werden üblicherweise Puffer und Fällungsmittel bei der Polymerisation zugesetzt. Die Luft im verbleibenden Gasraum des Reaktors wird sorgfältig entfernt und TFE eingepreßt, wobei der Polymerisationsdruck zwischen 4 und 30 bar betragen kann. Nach dem Start der Polymerisation wird üblicherweise unter Konstanthaltung des Polymerisationsdruckes entsprechend der entstehenden Polymerisatmenge gasförmiges TFE nachgespeist.

Die auf diese Weise durch Suspensions-Polymerisation gewonnenen TFE-Polymerisate werden üblicherweise als granulares PTFE bezeichnet. Sie enthalten Comonomere nur als sogenannte Modifizierungsmittel, das heißt in einem so geringen Ausmaß, daß das TFE-Polymerisat das Charakteristikum des Homopolymerisats PTFE, aus der Schmelze nicht verarbeitbar zu sein, beibehält.

Granulares PTFE unterscheidet sich von der zweiten Art von PTFE-Pulvern, den sogenannten Feinpulvern, die durch Polymerisation in Gegenwart von fluorierten Emulgatoren zu wäßrigen kolloidalen Dispersionen und deren anschließende Koagulation gewonnen werden, hinsichtlich seiner Kornstruktur, spezifischen Oberfläche, seiner Pulver- und Verarbeitungseigenschaften und seiner Anwendungsmöglichkeiten in prinzipieller Weise.

Die vorliegende Erfindung befaßt sich mit der Herstellung und Aufarbeitung von granularem PTFE. Dem Fachmann ist bekannt, daß die nach üblichen Verfahren direkt aus dem Polymerisationsreaktor erhaltenen Suspensions-Polymerisate des TFE in Form faseriger, unregelmäßiger und für die meisten Verarbeitungszwecke zu grober Teilchen anfallen. Solche Rohpolymerisat-Pulver können aufgrund ihrer schlechten Rieselfähigkeit, ihres niedrigen Schüttgewichtes und ihres zu großen mittleren Teilchendurchmessers, der in der Regel über 1500 µm liegt, nur unter größten Schwierigkeiten weiterverarbeitet werden. Meist werden solche Rohpolymerisate einer Mahlung bis zu mittleren Teilchendurchmessern von <200 µm unterzogen, wodurch auch die mechanischen und elektrischen Eigenschaften daraus hergesteller Formkörper verbessert werden.

Insbesondere dort, wo für die gebräuchlichen Weiterverarbeitungsmethoden von granularem PTFE nach der sogenannten Preß-Sinter-Technik oder nach der Ram-Extrusion automatische Dosieranlagen eingesetzt werden, wie dies heute allgemein üblich ist, ist eine störungsfreie Dosierung mit Rohpolymerisat-Pulver nicht möglich. Die schlechte Rieselfähigkeit führt zu häufigen Verstopfungen im Materialfluß der Dosierung und das zu niedrige Schüttgewicht ist hinderlich für eine ausreichende Kapazitätsauslastung der Anlage, da pro Arbeitstakt zu wenig Material eingefüllt werden kann. Das zu grobe Korn bedingt zu hohe Porosität und mangelnde Glätte der Oberfläche von daraus geformten Gegenständen.

Seit langem ist es daher bekannt, die Verarbeitbarkeit solcher granularer PTFE-Formpulver durch sogenannte Agglomerierverfahren in bewegten flüssigen Medien unter Einwirkung mechanischer Kräfte zu verbessern. Als solche flüssige Agglomeriermedien wurden beschrieben Wasser, organische Flüssigkeiten, die PTFE zu benetzen vermögen, amino- und/oder hydroxylsubstituierte Alkane oder Gemische aus Wasser und in Wasser weitgehend unlöslichen organischen Flüssigkeiten. Voraussetzung für einen solchen Agglomerationsprozeß ist ein vorheriges Mahlen des erhaltenen Rohpolymerisats auf einer mittleren Teilchendurchmesser <200 µm. Nach einem üblichen Verfahren, wie es zum Beispiel in der US-PS 2 936 301 beschrieben ist, erfolgt eine solche Mahlung zweckmäßigerweise in einer Gasstrahlmühle, wobei jedoch die damit erreichten Fließeigenschaften für die automatische Dosierung nicht ausreichen. Vor dem Mahlprozeß ist ein Wasch- und ein Trocknungsprozeß erforderlich, der durch die schlechten Transporteigenschaften außerordentlich behindert wird. Aus diesem Grund hat es sich eingebürgert, der Trocknung und Feinmahlung des granularen TFE-Rohpolymerisats noch eine Naßmahlung mittels einer Schneidvorrichtung vorzuschalten, wobei gleichzeitig das Waschen des Rohpolymerisats und die Entfernung der Polymerisationshilfsstoffe bewirkt werden. Dennoch stellt dieser Naßmahlschritt eine zeitraubende und störanfällige Maßnahme dar, auf die man gern verzichten würde. Es ist die Aufgabe der vorliegenden Erfindung, dies zu ermöglichen, indem dem Rohpolymerisat eine verbesserte Kornstruktur verliehen wird.

Die DE-A-23 25 562 beschreibt Formmassen, bestehend aus 99,95 Mol-% bis etwa 99,50 Mol-% TFE-Einheiten und etwa 0,05 Mol-% bis etwa 0,50 Mol-% Chlortrifluorethylen, wobei die Herstellung so erfolgt, daß die Partialdrucke der beiden Monomeren während der Polymerisation konstant sind und auf diese Weise Copolymere mit konstanter Zusammensetzung erhalten werden. Es wurde festgestellt, daß die so erhaltenen Polymeren eine verbesserte Beständigkeit gegen Kaltfluß aufweisen. Über den Einfluß von Inertgasdruck auf die Morphologie der Polymerpartikel wurden keine Angaben gemacht.

Die Aufgabe der vorliegenden Erfindung wird gelöst durch ein Verfahren der eingangs genannten Art, das dadurch gekennzeichnet ist, daß der Gesamtdruck der aufgepreßten Mischung 5 bis 50 bar und die Konzentration des Tetrafluorethylens in dieser Mischung 30 bis 70 Mol-% beträgt, wobei die besagte Konzentration durch entsprechende Nachspeisung von Tetrafluorethylen während der Polymerisation in diesem Bereich gehalten wird.

Die Suspensions-Polymerisation nach dem erfindungsgemäßen Verfahren wird unter Rühren und sonst üblichen Bedingungen in wäßriger Phase durchgeführt. Es können die bekannten radikalbildenden und wasserlöslichen Initiatoren verwendet werden, insbesondere die Alkali- und Ammoniumsalze von Persulfaten, Percarbonaten, ferner wasserlösliche Peroxide, Acylperoxide oder auch Alkalipermanganate. Ebenfalls eingesetzt werden können Redox-Systeme mit einer der vorgenannten peroxidischen Verbindungen, insbesondere Persulfat, als oxidierende Komponente und mit einer reduzierenden Komponente wie Bisulfit, Hydrazin, Dithionit oder einer Diimin liefernden, wasserlöslichen Stickstoffverbindung, wie zum Beispiel Azodicarbonsäure und deren Salze oder Azodicarbonamid. Die Polymerisation kann sowohl im leicht sauren wie im leicht alkalischen Milieu erfolgen. Bei Anwendung von Permanganaten wird vorteilhafterweise ein saures Medium verwendet, bei allen anderen Initiatoren vorteilhafterweise ein alkalisches Milieu. Die Polymerisation kann gegebenenfalls in Gegenwart geringer Mengen von Puffersubstanzen, wie insbesondere Ammoniumsalzen, zum Beispiel Ammoniumcarbaminat,

Ammoniumcarbonat und Ammoniumoxalat, durchgeführt werden. Auch können gegebenenfalls bekannte Fällungsmittel, wie zum Beispiel Borax oder anorganische, wasserlösliche Phosphate, zugegen sein. Ferner können gegebenenfalls kleine Mengen von Schwermetallsalzen zur Erleichterung des Startzerfalls von Redox-Systemen in Konzentrationen von 1 x 10⁻⁵ bis 40 x 10⁻⁵ Gew.-%, bezogen auf die Gesamtflotte, in Form der Salze von beispielsweise zweiwertigem Kupfer, zwei- oder dreiwertigem Eisen oder dreiwertigem Chrom anwesend sein.

Die Polymerisation des TFE kann als reine Homopolymerisation erfolgen oder es können geringe Mengen eines modifizierenden Comonomeren bei der Polymerisation, nämlich 0 bis 0,6 Mol-%, vorzugsweise 0 bis 0,4, insbesondere - wenn anwesend - 0,05 bis 0,4 Mol-%, bezogen auf TFE im Gasraum, zugegen sein. Die dabei in das Polymerisat eingebaute Menge eines solchen modifizierenden Comonomeren ist so gering bemessen, daß das Charakteristikum von PTFE - nämlich aus der Schmelze nicht verformbar zu sein - erhalten bleibt. Modifizierende Comonomere sind perfluorierte Olefine und Perfluor(alkylvinyl)ether, auch solche, die in ω-Stellung durch H substituiert sind, vorzugsweise Hexafluorpropylen und Perfluor(propylvinyl)ether.

Gegebenenfalls enthält das wäßrige Polymerisationsmedium vorteilhafterweise auch kleine Mengen von telogen inaktiven perfluorierten Emulgatoren, wie beispielsweise Salze von Perfluorcarbonsäuren. Die Konzentration an solchen Emulgatoren soll jedoch 30 ppm nicht überschreiten, vorzugsweise liegt sie unter 20 ppm. Diese Menge ist so niedrig bemessen, daß das anfallende Polymerisat nicht als kolloidale Dispersion im wäßrigen Medium verbleibt.

Die Suspensions-Polymerisation erfolgt bei einer Temperatur von 5 bis 90 °C, vorzugsweise 10 bis 40 °C, wobei diese Temperatur während des Polymerisationsverlaufs im wesentlichen konstant gehalten wird.

Die Polymerisation nach dem erfindungsgemäßen Verfahren wird in Gegenwart eines Inertgases durchgeführt. Dabei soll der Gesamtdruck, der sich durch Aufpressen von TFE und Inertgas vor Beginn der Polymerisation aufbaut, 5 bis 50 bar, vorzugsweise 5 bis 30 bar, betragen, wobei ein Gemisch aufgepreßt wird, in dem die Konzentration des TFE 30 bis 70 Mol-%, vorzugsweise 30 bis 65 Mol-%, der Gesamtmischung beträgt. Wie üblich wird das mit dem wäßrigen Medium, das die Polymerisationsingredienzien enthält, gefüllte Reaktionsgefäß vorher sorgfältig von Luft beziehungsweise Sauerstoff durch mehrmaliges, abwechselndes Evakuieren und Spülen mit Stickstoff befreit.

Nachdem die Polymerisation gestartet worden ist, wird TFE nachgespeist, und zwar in einer Menge, daß die Konzentration des TFE, bezogen auf die Gasmischung, im genannten Bereich von 30 bis 70 Mol-%, vorzugsweise 30 bis 65 Mol-%, gehalten wird. In einer bevorzugten Ausführungsform des erfindungsgemäßen Verfahrens wird TFE im wesentlichen im Ausmaß des Verbrauchs durch das sich bildende Polymerisat nachgespeist, wobei der Gesamtdruck entsprechend der Abnahme des freien Gasraums im Reaktionsgefäß ansteigt, jedoch innerhalb der angegebenen Grenzen verbleibt und die TFE-Konzentration im wesentlichen konstant bleibt. In einer weiteren bevorzugten Variante des erfindungsgemäßen Verfahrens wird die Nachspeisung von TFE so geregelt, daß der Gesamtdruck während der Polymerisationsdauer konstant bleibt und die TFE-Konzentration während dieser Zeit abnimmt, jedoch innerhalb der oben gegebenen Grenzen bleibt.

Inertgase im Rahmen des erfindungsgemäßen Verfahrens sind alle gasförmigen Elemente oder Verbindungen, die gegen TFE, gegebenenfalls auch gegen anwesende modifizierende Comonomere, und gegen die Ingredienzien der TFE-Polymerisation inert sind und die nicht in die Polymerisation eingreifen. Vorzugsweise sind dies Edelgase, wie Helium, Argon, Krypton oder Neon, Kohlendioxid oder auch Perfluorkohlenstoff-Verbindungen, wie Perfluormethan oder -ethan, insbesondere aber Stickstoff.

Es ist anzumerken, daß eine Polymerisation von TFE unter Zusatz von Inertgasen in der US-PS 2 394 243 erwähnt ist. Die dort beschriebene Suspensions-Polymerisation von TFE in wäßriger Phase soll bei außerordentlich hohen Drücken durchgeführt werden. Drücke bis zu 35,2 bar (500 lbs./sq.in) werden als noch wirksam bezeichnet, jedoch liegen die tatsächlich angewandten Drücke wesentlich höher, nämlich im Bereich von 70 bis 280 bar. Dabei sind diese Drücke ausdrücklich als der TFE-Partialdruck zu verstehen, gegebenenfalls hinzugefügtes Inertgas wird einzig und allein als Mittel zur weiteren Druckerhöhung bezeichnet. Der Zusatz von Inertgas ist nicht von kritischer Bedeutung. Die genannten Drücke sind dabei die Anfangsdrücke, eine Nachspeisung von TFE während der Polymerisation ist nicht vorgesehen.

Über eine bestimmte einzuhaltende Konzentration des TFE oder eine Beeinflussung des entstehenden Polymerisates ist nichts ausgesagt. Es war daher sehr überraschend, daß im erfindungsgemäßen Verfahren durch die Zugabe von Inertgas in bestimmter Dosierung die Kornstruktur der gebildeten TFE-Polymerisation in äußerst vorteilhafter Weise beeinflußt wird. Ein nach üblicher Methode hergestelltes Suspensions-Polymerisat des TFE weist einen weit überwiegenden Anteil von Teilchen auf, die faser- oder fadenförmige Gestalt haben oder Körnchen mit fadenförmigen Anhängseln sind, und diese Art von Teilchen ist für die schlechten Transporteigenschaften des Pulvers im Trocknungs- und Mahlprozeß verantwortlich. Dadurch wird im Trocknungsprozeß der Durchfluß durch den Trockner und damit die kontinuierliche Aufgabe auf die Gasstrahlmühle behindert, so daß eine qualitätsgerechte Mahlung sehr problematisch wird. Daher ist die Vorschaltung einer Naßmahlstufe bei kontinuierlichen Aufarbeitungsprozessen unumgänglich.

Das nach dem erfindungsgemäßen Verfahren hergestellte Produkt weist entscheidend weniger derartige fadenförmige Teilchen oder Anhängsel und eine erheblich gleichmäßigere Korngröße auf, und es ist daher in der Aufarbeitung wesentlich besser handhabbar. Dies führt dazu, daß das TFE-Polymerisat beim Ablassen besser aus dem Kessel fließt, besser waschbar ist und daß auf den Schritt der Naßmahlung völlig verzichtet werden kann, ohne daß im Trocknungsprozeß und in der anschließenden Feinmahlung in der Gasstrahlmühle Störungen auftreten.

Ferner ist auch die Mahlbarkeit des nach dem erfindungsgemäßen Verfahren hergestellten TFE-Polymerisats entscheidend verbessert. Bei gleichen Mahlbedingungen wird unter Benutzung einer Gasstrahlmühle bei den nach dem erfindungsgemäßen Verfahren hergestellten Produkten ein niedrigerer Grobanteil beobachtet, wie aus Tabelle 2 ersichtlich.

Bei Benutzung einer Prallmühle, zum Beispiel einer Zirkoplexsichtermühle der Firma Alpine, gibt sich die bessere Mahlbarkeit dadurch zu erkennen, daß bei gleicher Energieaufnahme der Mühle der pro Zeiteinheit erzielbare Durchsatz an qualitätsgerechtem Produkt für das erfindungsgemäße Produkt deutlich höher ist.

Ferner bringt jene Variante des erfindungsgemäßen Verfahrens, bei der (bei abnehmender TFE-Konzentration) der Gesamtdruck konstant gehalten wird, einen weiteren Vorteil: Die Molekulargewichtsverteilung des gebildeten TFE-Polymerisats ist erheblich breiter, wodurch bekanntermaßen die Eigenschaften von daraus geformten Erzeugnissen günstig beeinflußt werden.

Die Erfindung wird durch die folgenden Beispiele erläutert.

### Beispiel 1

In einen 200-l-Emaillekessel werden 100 l entionisiertes Wasser und darin gelöst 6 g Ammoniumoxalat eingefüllt. Der Kessel wird durch abwechselndes Evakuieren und Spülen mit nachgereinigtem Stickstoff von jeglichem Sauerstoff befreit und die Temperatur auf 15 °C eingestellt. Sodann werden nacheinander 7 bar Stickstoff und 6 bar TFE entsprechend einem Gesamtdruck von 13 bar aufgepreßt. Die Polymerisation wird durch einmaliges Zudosieren von 150 mg KMnO₄, in 100 ml entgastem Wasser gelöst, in Gang gebracht. TFE wird während der Polymerisation ständig zugeführt, und zwar so, daß die Konzentration an TFE in dem sich durch das entstehende Polymerisat verkleinernden Gasraum im Kessel im wesentlichen nicht geändert wird. Dies wird dadurch erreicht, daß man den Sollwert des TFE-Druckreglers entsprechend der Gasvolumenabnahme stufenweise erhöht. Die Gasvolumenabnahme errechnet sich aus der in den Kessel eingeströmten und integrierend gemessenen TFE-Menge und der Dichte (ρ ≈ 2,3 g/cm³) des gebildeten PTFE. Dadurch wird also der Gesamtdruck während der Polymerisation ständig erhöht, und zwar jeweils nach 1 kg gebildetem PTFE. Dabei setzt sich die Gasphase aus 54 Mol-% N₂ und 46 Mol-% TFE zusammen. Diese Gasphasenzusammensetzung bleibt während der gesamten Polymerisationsdauer im wesentlichen konstant. Wenn die Einfahrmenge von 40 kg erreicht wird, beträgt der Gesamtdruck etwa das 1,2fache des Anfangsdruckes. Nach Erreichen der genannten Einfahrmenge von 40 kg wird die Polymerisation durch Schließen des TFE-Ventils und Druckentlastung beendet.

Der Kessel wird mehrmals mit N₂ gespült und dadurch das Polymerisat entgast. Über ein Sieb wird die Suspension vom Wasser grob getrennt. Das Rohpolymerisat wird hier, wie in allen folgenden Beispielen, bei 220 °C im Umlufttrockenschrank getrocknet.

### Beispiel 2

Der Kessel wird, wie in Beispiel 1 beschrieben, chargiert und nach Evakuieren und Stickstoffspülung mit 7 bar N₂ und 6 bar TFE unter Druck gesetzt und die Polymerisation ebenfalls mit 150 mg KMnO₄ gestartet. Zum Unterschied von Beispiel 1 wird hier aber der Gesamtdruck von 13 bar durch eine geregelte TFE-Nachspeisung während der gesamten Polymerisation konstant gehalten, indem der Sollwert der Druckregelung auf diesen Wert eingestellt wird. Nach Erreichen der Einfahrmenge von 40 kg wird die Polymerisation beendet.

Bei diesem Versuch besteht die Gasphase bei Polymerisationsbeginn aus 54 Mol-% N₂ und 46 Mol-% TFE, bei Polymerisationsende aus 65 Mol-% N₂ und 35 Mol-% TFE.

### Beispiel 3

Arbeitsweise wie Beispiel 1, aber anstelle von Stickstoff wird als Inertgas hochgereinigtes Kohlendioxid benutzt.

### Beispiel 4

Arbeitsweise wie Beispiel 2, aber anstelle von Stickstoff wird hochgereinigtes Kohlendioxid benutzt.

### Beispiel 5

Arbeitsweise wie Beispiel 1, aber anstelle von Stickstoff wird Argon als Inertgas benutzt.

### Beispiel 6

Arbeitsweise wie Beispiel 1, aber anstelle von Stickstoff wird Helium als Inertgas benutzt.

### Beispiel 7 (Vergleichsbeispiel)

Der Kessel wird, wie in Beispiel 1 beschrieben, chargiert und inertisiert. Es werden nach dem Evakuieren zur Entfernung des Spülstickstoffes 6 bar TFE aufgepreßt und die Polymerisation durch einmalige Zugabe von 150 mg Kaliumpermanganat gestartet. Der Druck wird über die gesamte Polymerisationsdauer konstant gehalten und nach Erreichen der Einfahrmenge von 40 kg beendet.

### Beispiel 8 (Vergleichsbeispiel)

Der Versuch wird wie in Beispiel 2 in Konstanthalten des Gesamtdruckes durchgeführt, mit dem Unterschied, daß zu Beginn der Polymerisation die Gasphase sich aus 25 Mol-% N₂ und 75 Mol-% TFE zusammengesetzt bei einem Gesamtdruck von 8 bar. Bei Reaktionsende beträgt die Gasphasenzusammensetzung 30 Mol-% N₂ und 70 Mol-% TFE.

### Beispiel 9

Der 200-l-Kessel wird mit 100 l entionisiertem Wasser, in dem 40 g (NH₄)₂ CO₃ gelöst sind, gefüllt, durch abwechselndes Evakuieren und Spülen mit N₂ inertisiert und die Temperatur auf 70 °C eingestellt. Sodann werden 10 g PPVE zudosiert und 5,5 bar N₂ und 10 bar TFE aufgepreßt. Die Polymerisation wird durch einmaliges Zudosieren von 3 g Ammoniumpersulfat, in 100 ml entgastem Wasser gelöst, in Gang gebracht. Während der Polymerisation wird schrittweise, nach jeweils 1 kg PTFE, PPVE zudosiert, und zwar pro kg PTFE etwa 1,5 g, insgesamt 60 g.

Der Gesamtdruck wird während der gesamten Polymerisationszeit konstant gehalten. Nach Erreichen einer Einfahrmenge von 40 kg wird die Polymerisation durch Unterbrechung der TFE-Zufuhr und Druckentlastung beendet.

Bei Polymerisationsbeginn ist die Gasphasenzusammensetzung 64,5 Mol-% TFE und 35,5 Mol-% N₂, bei Polymerisationsende 57,4 Mol-% TFE und 42,6 Mol-% N₂.

### Beispiel 10

Wie Beispiel 9, mit dem Unterschied, daß 8 bar N₂ und 8 bar TFE bei Polymerisationsbeginn in den Kessel aufgepreßt werden. Der Gesamtdruck von 16 bar wird auch hier über die Polymerisationsdauer konstant gehalten und die Polymerisation bei einer Einfahrmenge von 40 kg beendet. Die Gasphasenzusammensetzung beträgt bei Polymerisationsbeginn 50 Mol-% TFE und 50 Mol-% N₂, bei Polymerisationsende 40 Mol-% TFE und 60 Mol-% N₂.

### Beispiel 11 (Vergleichsbeispiel)

Die Polymerisation wird durchgeführt, wie in Beispiel 9 beschrieben, mit dem Unterschied, daß kein Stickstoff aufgepreßt wird, die Polymerisation also bei einem konstanten TFE-Druck von 10 bar durchgeführt wird.

### Beispiel 12 (Vergleichsbeispiel)

Arbeitsweise wie Beispiel 11, jedoch mit dem Unterschied, daß die Polymerisation bei einem konstanten TFE-Druck von 8 bar durchgeführt wird.

Das getrocknete Rohpolymerisat wird gemäß ASTM-Vorschrift D 1457-88 einer Trockensiebanalyse unterworfen. Hierbei wird eine Siebanordnung der Firma Haver & Boecker, Typ Haver EML 200-89 mit einem Siebsatz von 3000, 2000, 1800, 1400, 1000, 800, 600, 400 und 200 µm benutzt.

Die Ergebnisse in Tabelle 1 sind entsprechend der ASTM-Norm D 1457-88 in kumulativer (integraler) Form aufgelistet. Aus diesen Ergebnissen kann die Beeinflussung der Korngrößenverteilung am einfachsten über den ebenfalls angegebenen d₅₀-Wert beurteilt werden. Die Erniedrigung dieses Wertes bei den nach dem erfindungsgemäßen Verfahren gewonnenen Polymerisaten beruht hauptsächlich auf dem deutlich herabgesetzten Anteil an faserigen Teilchen im Rohpolymerisat.

Die Korngrößenverteilung und die Kornform können in einem gewissen Ausmaß durch die speziellen Rührbedingungen und durch die Wandrauhigkeit des Reaktionsgefäßes beeinflußt werden. Daher sind alle in Tabelle 1 aufgelisteten Versuche im gleichen Kessel bei gleichen Rührbedingungen durchgeführt worden.

Das getrocknete Rohpolymerisat wird ferner ohne vorhergehende Naßmahlung über einen Dosierbunker über eine Dosierschnecke in eine Luftstrahlmühle der Firma Alpine, Typ 315 AS, unter für alle hier angeführten Beispiele und Vergleichsbeispiele gleichen Mahlbedingungen gemahlen. Die Mahlbedingungen sind Raumtemperatur, Eingangsdruck 5 bar.

Die Dosiergeschwindigkeit ist bei den Beispielen 1 bis 8 14,5 kg/h, bei den Beispielen 9 bis 12 8,5 kg/h. Die niedrigere Dosiergeschwindigkeit bei den Beispielen 9 bis 12 ist erforderlich, da bekanntlich die modifizierten TFE-Suspensions-Polymerisate grundsätzlich schlechter mahlbar sind als die Polymerisate, die ohne Zugabe von Modifizierungsmitteln hergestellt wurden. Es werden jeweils 15 kg Rohpolymerisat gemahlen.

Das gemahlene Produkt wird gemäß der genannten ASTM-Norm einer Naßsiebanalyse unterworfen. Hierbei wird ein Gerät der Firma Haver & Boecker mit einem Siebsatz von 100, 75, 50 und 33 µm benutzt.

Die Ergebnisse dieser Naßsiebung sind in Tabelle 2, ebenfalls in kumulativer Form, aufgelistet. Diese Tabelle dokumentiert durch die Zunahme des Anteils <33 µm und durch die Abnahme der Anteile >50 µm verbesserte Mahlbarkeit der Produkte des erfindungsgemäßen Verfahrens.

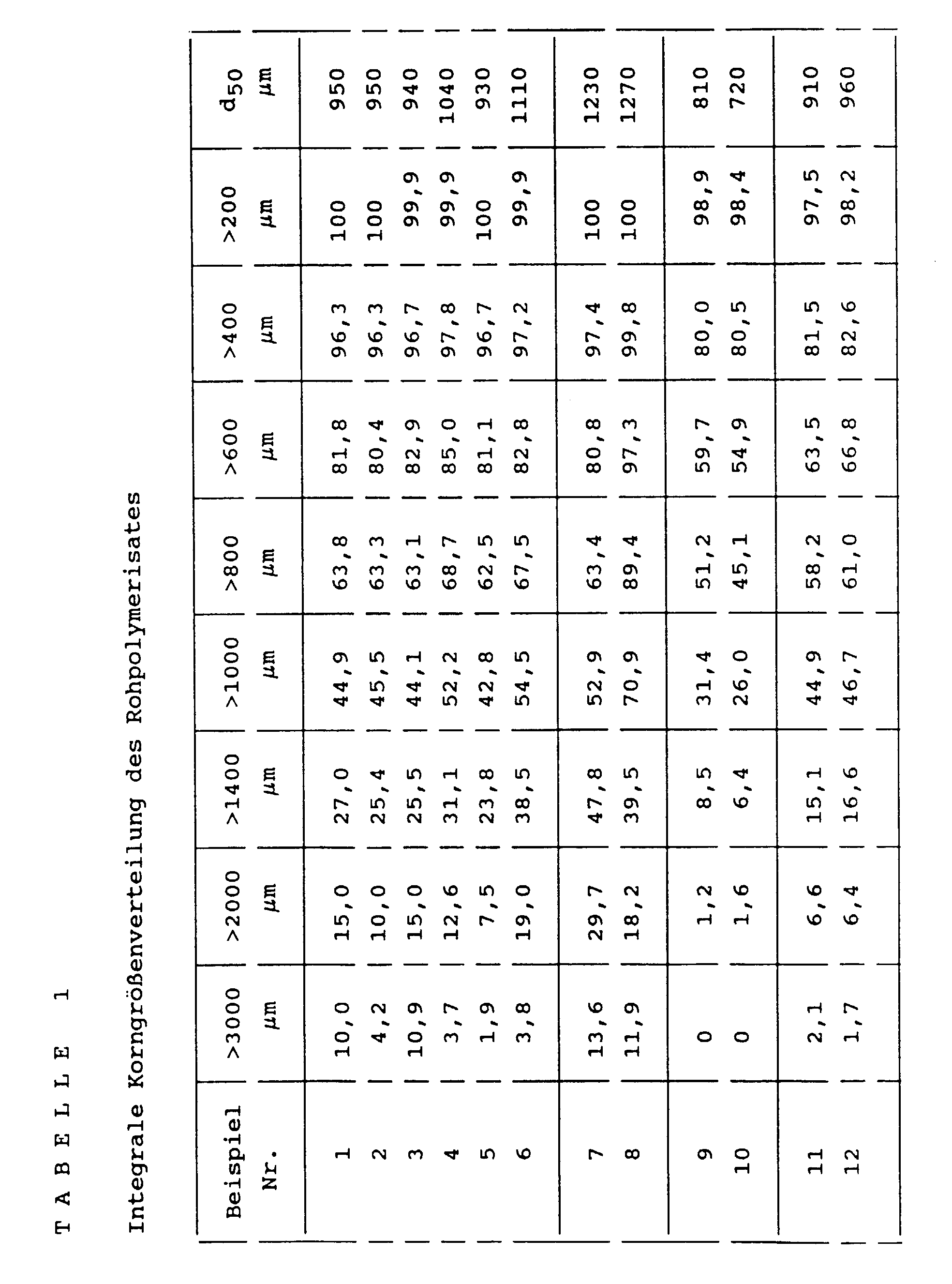

**TABELLE 2**

| Integrale Korngrößenverteilung des gemahlenen Produktes | | | | | |
|---|---|---|---|---|---|
| Beispiel Nr. | >100 µm | >75 µm | >50 µm | >33 µm | <33 µm |
| 1 | 0,2 | 0,4 | 4,0 | 18,0 | 82,0 |
| 2 | 0,5 | 1,0 | 5,0 | 21,0 | 79,0 |
| 3 | 0 | 0,2 | 0,6 | 1,2 | 98,8 |
| 4 | 0 | 0,2 | 0,8 | 1,6 | 98,4 |
| 5 | 0 | 0 | 0,5 | 0,8 | 99,2 |
| 6 | 0 | 0 | 0,1 | 0,4 | 99,6 |
| 7 | 1,0 | 4,5 | 11,0 | 36,0 | 64,0 |
| 8 | 1,0 | 1,8 | 9,1 | 30,3 | 69,7 |
| 9 | 0 | 0,5 | 4,6 | 14,6 | 85,4 |
| 10 | 0 | 0,2 | 1,3 | 7,6 | 92,4 |
| 11 | 0,3 | 2,2 | 11,4 | 28,1 | 71,9 |
| 12 | 0,2 | 1,2 | 7,5 | 23,1 | 76,9 |

## Patentansprüche

1. Verfahren zur Herstellung von granularem, aus der Schmelze nicht verarbeitbarem Tetrafluorethylen-Polymerisat durch Suspensions-Polymerisation von Tetrafluorethylen und 0 bis 0,6 Mol-% eines perfluorierten Olefins oder Perfluor(alkyl-vinyl)ethers als modifizierendem Comonomeren in wäßriger Phase in Gegenwart radikalbildender Initiatoren, wobei vor Beginn der Polymerisation eine Mischung von Tetrafluorethylen und Inertgas aufgepreßt wird, dadurch gekennzeichnet, daß der Gesamtdruck der aufgepreßten Mischung 5 bis 50 bar und die Konzentration des Tetrafluorethylens in dieser Mischung 30 bis 70 Mol-% beträgt, wobei die besagte Konzentration durch entsprechende Nachspeisung von Tetrafluorethylen während der Polymerisation in diesem Bereich gehalten wird.

2. Verfahren zur Herstellung von granularem, aus der Schmelze nicht verarbeitbarem Tetrafluorethylen-Polymerisat gemäß Anspruch 1, dadurch gekennzeichnet, daß der Gesamtdruck der aufgepreßten Mischung 5 bis 30 bar beträgt.

3. Verfahren zur Herstellung von granularem, aus der Schmelze nicht verarbeitbarem Tetrafluorethylen-Polymerisat gemäß einem oder mehreren der Ansprüche 1 und 2, dadurch gekennzeichnet, daß Tetrafluorethylen während der Polymerisation im Ausmaß des Verbrauchs nachgespeist wird.

4. Verfahren zur Herstellung von granularem, aus der Schmelze nicht verarbeitbarem Tetrafluorethylen-Polymerisat gemäß einem oder mehreren der Ansprüche 1 und 2, dadurch gekennzeichnet, daß Tetrafluorethylen während der Polymerisation in einem solchen Maß nachgespeist wird, daß der Gesamtdruck konstant bleibt.

5. Verfahren zur Herstellung von granularem, aus der Schmelze nicht verarbeitbarem Tetrafluorethylen-Polymerisat gemäß einem oder mehreren der Ansprüche 1 bis 4, dadurch gekennzeichnet, daß das Inertgas Stickstoff ist.

6. Verfahren zur Herstellung von granularem, aus der Schmelze nicht verarbeitbarem Tetrafluorethylen-Polymerisat gemäß einem oder mehreren der Ansprüche 1 bis 5, dadurch gekennzeichnet, daß Tetrafluorethylen und 0,05 bis 0,4 Mol-% eines modifizierenden Comonomeren polymerisiert werden.

7. Verfahren zur Herstellung von granularem, aus der Schmelze nicht verarbeitbarem Tetrafluorethylen-Polymerisat gemäß einem oder mehreren der Ansprüche 1 bis 6, dadurch gekennzeichnet, daß als modifizierendes Comonomeres Hexafluorpropylen oder Perfluor(propylvinyl)ether eingesetzt wird.

## Claims

1. A process for the preparation of a non-melt-fabricable granular tetrafluoroethylene polymer by suspension polymerization of tetrafluoroethylene and 0 to 0.6 mol% of a perfluorinated olefin or perfluoro(alkyl vinyl)ether as modifying comonomer in an aqueous phase in the presence of free-radical forming initiators, a mixture of tetrafluoroethylene and an inert gas being charged under pressure before starting the polymerization, wherein the total pressure of the charged mixture is 5 to 50 bar and the concentration of the tetrafluoroethylene in this mixture is 30 to 70 mol%, said concentration being kept within this range by an appropriate feed of tetrafluoroethylene during the polymerization.

2. The process as claimed in claim 1 for the preparation of a non-melt-fabricable granular tetrafluoroethylene polymer, wherein the total pressure of the charged mixture is 5 to 30 bar.

3. The process as claimed in one or more of claims 1 and 2 for the preparation of a non-melt-fabricable granular tetrafluoroethylene polymer, wherein tetrafluoroethylene is fed in during the polymerization at the rate at which it is consumed.

4. The process as claimed in one or more of claims 1 and 2 for the preparation of a non-melt-fabricable granular tetrafluoroethylene polymer, wherein tetrafluoroethylene is fed in during the polymerization at such a rate that the total pressure remains constant.

5. The process as claimed in one or more of claims 1 to 4 for the preparation of a non-melt-fabricable granular tetrafluoroethylene polymer, wherein the inert gas is nitrogen.

6. The process as claimed in one or more of claims 1 to 5 for the preparation of a non-melt-fabricable granular tetrafluoroethylene polymer, wherein tetrafluoroethylene and 0.05 to 0.4 mol% of a modifying comonomer are polymerized.

7. The process as claimed in one or more of claims 1 to 6 for the preparation of a non-melt-fabricable granular tetrafluoroethylene polymer, wherein the modifying comonomer employed is hexafluoropropylene or perfluoropropyl perfluorovinyl ether.

## Revendications

1. Procédé de préparation de polymère de tétrafluoroéthylène granulaire, non transformable à l'état fondu, par polymérisation en suspension de tétrafluoroéthylène et de 0 à 0,6% en mole d'une oléfine perfluorée ou de perfluoro-oxyde d'alkyle et de vinyle comme comonomère de modification en phase aqueuse en présence d'initiateurs radicalaires, dans lequel on met sous pression avant le début de la polymérisation un mélange de tétrafluoroéthylène et de gaz inerte, caractérisé en ce que la pression totale du mélange sous pression s'élève à 5 à 50 bar et la concentration du tétrafluoroéthylène dans ce mélange de 30 à 70% en mole, dans lequel la concentration indiquée est maintenue dans ce domaine par réalimentation correspondante de tétrafluoroéthylène pendant la polymérisation.

2. Procédé de préparation de polymère de tétrafluoroéthylène granulaire, non transformable à l'état fondu, selon la revendication 1, caractérisé en ce que la pression totale du mélange sous pression s'élève à 5 à 30 bar.

3. Procédé de préparation de polymère de tétrafluoroéthylène granulaire, non transformable à l'état fondu, selon une ou plusieurs des revendications 1 et 2, caractérisé en ce que le tétrafluoroéthylène est réalimenté en proportion de la consommation pendant la polymérisation.

4. Procédé de préparation de polymère de tétrafluoroéthylène granulaire, non transformable à l'état fondu, selon une ou plusieurs des revendications 1 et 2, caractérisé en ce que le tétrafluoroéthylène est réalimenté pendant la polymérisation en une quantité telle que la pression totale reste constante.

5. Procédé de préparation de polymère de tétrafluoroéthylène granulaire, non transformable à l'état fondu, selon une ou plusieurs des revendications 1 à 4, caractérisé en ce que le gaz inerte est l'azote.

6. Procédé de préparation de polymère de tétrafluoroéthylène granulaire, non transformable à l'état fondu, selon une ou plusieurs des revendications 1 à 5, caractérisé en ce qu'on polymérise du tétrafluoroéthylène et 0,05 à 0,4% en mole d'un comonomère modifiant.

7. Procédé de préparation de polymère de tétrafluoroéthylène granulaire, non transformable à l'état fondu, selon une ou plusieurs des revendications 1 à 6, caractérisé en ce qu'on utilise comme comonomère modifiant de l'hexafluoropropylène ou du perfluoro-oxyde de propyle et de vinyle.
